(19) **Europäisches Patentamt** / **European Patent Office** / **Office européen des brevets**

(11) **EP 1 922 572 B1**

(12) **FASCICULE DE BREVET EUROPEEN**

(45) Date de publication et mention
de la délivrance du brevet:
**21.01.2009 Bulletin 2009/04**

(51) Int Cl.:
***G02B 5/09*** *(2006.01)*          ***H01Q 1/28*** *(2006.01)*
***G02B 23/00*** *(2006.01)*

(21) Numéro de dépôt: **06808281.7**

(22) Date de dépôt: **05.09.2006**

(86) Numéro de dépôt international:
**PCT/FR2006/050842**

(87) Numéro de publication internationale:
**WO 2007/028923 (15.03.2007 Gazette 2007/11)**

(54) **REFLECTEUR DEPLOYABLE EN FORME DE TRIANGLE DE REULEAUX, POUR UN INSTRUMENT D'OBSERVATION SPATIALE**

EINSETZBARER REFLEKTOR IN FORM EINES REULEAUX-DREIECKS FÜR EIN RAUMBETRACHTUNGSINSTRUMENT

DEPLOYABLE REFLECTOR IN THE FORM OF A REULEAUX TRIANGLE FOR A SPACE OBSERVATION INSTRUMENT

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **05.09.2005 FR 0552668**

(43) Date de publication de la demande:
**21.05.2008 Bulletin 2008/21**

(73) Titulaire: **Thales**
**92200 Neuilly sur Seine (FR)**

(72) Inventeurs:
• **FALZON, Frédéric**
**F-06580 Pegomas (FR)**
• **BLANC, Philippe**
**F-06140 Vence (FR)**

(74) Mandataire: **Esselin, Sophie et al**
**Marks & Clerk France**
**Conseils en Propriété Industrielle**
**Immeuble " Visium "**
**22, avenue Aristide Briand**
**94117 Arcueil Cedex (FR)**

(56) Documents cités:
**US-A- 3 574 447**

• **PROC SPIE INT SOC OPT ENG; PROCEEDINGS OF SPIE - THE INTERNATIONAL SOCIETY FOR OPTICAL ENGINEERING 1994 PUBL BY SOCIETY OF PHOTO-OPTICAL INSTRUMENTATION ENGINEERS, BELLINGHAM, WA, USA, vol. 2200, 1994, pages 335-346, XP002414559**

## Description

L'invention concerne les instruments d'observation embarqués sur des engins spatiaux, comme par exemple des satellites d'observation, et plus précisément les instruments d'observation comportant un réflecteur destiné à être déployé (ou déplié) une fois l'engin spatial qui les supporte parvenu dans une position choisie.

Comme le sait l'homme de l'art, certaines missions d'observation spatiale requièrent des instruments d'observation munis d'un réflecteur (généralement de type dit primaire) de grand diamètre. C'est notamment le cas des missions destinées à observer la Terre ou le ciel avec une haute résolution depuis des orbites hautes, géostationnaires (« GEO »), Molnya ou L2, par exemple. Le futur télescope JWST (pour « James Webb Space Telescope ») en est un exemple. Il utilise en effet un miroir primaire d'environ 6 mètres de diamètre.

Les engins spatiaux qui supportent de tels instruments d'observation sont placés en orbite au moyen de fusées dont le diamètre de la coiffe fixe le diamètre de l'instrument. Si le diamètre de l'instrument une fois en orbite excède celui de la coiffe, son réflecteur primaire doit être compacté (ou replié) au moyen d'un mécanisme approprié pendant la phase de tir (ou de lancement), puis décompacté (ou déployé, ou encore déplié) une fois en orbite grâce au mécanisme et à une stratégie de décompactage. Ces stratégies de compactage/décompactage sont élaborées sous plusieurs contraintes, comme par exemple des contraintes mécaniques (liées aux mécanismes), des contraintes thermo-élastiques et des contraintes de qualité d'image. Ces contraintes étant bien connues, le nombre de solutions pouvant être mises en oeuvre est relativement limité.

Une solution, notamment utilisée pour le télescope JWST, consiste à utiliser un miroir primaire muni d'une partie centrale et d'au moins deux parties latérales repliées lors du tir. Les parties centrale et latérales sont par exemple constituées de pavés réfléchissants de forme hexagonale qui, une fois décompactés (ou déployés), constituent un pavage hexagonal approximant un paraboloïde. Il est rappelé que le pavage hexagonal est optimal du fait qu'il est 13,4 % moins dense qu'un pavage rectangulaire pour une même fonction à bande limitée sur un domaine circulaire.

Ce pavage hexagonal pose un problème du fait qu'il n'optimise pas la surface collectrice (ou réfléchissante). En effet, si l'on considère que la surface collectrice minimale est inscrite dans un domaine circulaire qui n'inclut pas la totalité des surfaces des pavés hexagonaux collecteurs, alors toutes les portions des pavés qui se trouvent en dehors de ce domaine circulaire sont inutiles et augmentent l'encombrement et la masse du miroir. Par exemple, on peut montrer que dans le cas d'un pavage (échantillonnage) comprenant 7 hexagones, environ 44,7 % de la surface collectrice est inutile du fait qu'elle est hors du disque à approcher. Si l'on considère maintenant que la totalité de la surface collectrice (et donc des surfaces des pavés) doit être sous-tendue par un domaine circulaire, alors il se produit une anisotropie de la FTM (« Fonction de Transfert de Modulation ») du fait de l'existence de domaines non remplis sur le pourtour du cercle, et donc d'un déficit de surface collectrice.

Pour remédier à cet inconvénient on peut par exemple utiliser des hexagones plus petits, et donc en plus grand nombre. L'approximation du disque est en effet meilleure et la surface collectrice perdue plus faible (environ 22 % de surface perdue en présence de 37 hexagones). Hélas, cette solution augmente considérablement la difficulté de réalisation du miroir. En effet, chaque pavé hexagonal du miroir devant être contrôlé activement au moyen d'un actionneur afin de contrecarrer les instabilités en orbite, il est préférable de limiter le nombre d'actionneurs, notamment pour limiter le taux de pannes en orbite, la complexité mécanique de la structure de support, de déploiement et de contrôle en orbite, la masse de l'ensemble et le coût de fabrication.

Aucune solution connue n'apportant une entière satisfaction, l'invention a donc pour but d'améliorer la situation.

Elle propose à cet effet un réflecteur déployable, pour un instrument d'observation spatiale, comprenant un nombre choisi d'éléments réfléchissants déployables qui, une fois qu'ils sont déployés dans une première position, définissent ensemble une surface réfléchissante en forme de triangle dit de Reuleaux à courbe convexe fermée dont la largeur est constante en fonction de la direction.

Cette solution permet de réaliser un compactage du réflecteur par pliage suivant des axes caractéristiques liés à la géométrie de sa forme particulière (triangle de Reuleaux constituant un orbiforme de surface minimale). Par ailleurs, ce triangle particulier héritant des propriétés du cercle tout en présentant une surface moindre, il offre une géométrie pupillaire différente de celle du disque mais conduisant à une isotropie du support de la FTM de l'instrument identique à celle dont on dispose avec une pupille circulaire.

On peut montrer que le réflecteur replié présente un encombrement circulaire dont le rayon correspond à 84,5 % du rayon d'une pupille circulaire équivalente (*i.e.* qui aurait la même fonction de coupure optique (ou FCO)). En outre, le gain d'encombrement latéral d'une telle solution par rapport à un réflecteur de forme circulaire est d'environ 15 %. Par ailleurs, cette solution conduit à une réduction de la surface collectrice (donc de la masse) de l'ordre de 10,3 % par rapport au disque. Le nombre de photons collectés est par conséquent sensiblement réduit dans le même rapport, mais il peut être compensé par un temps de pose plus grand ou par l'utilisation d'un traitement de restauration pour réaliser une image de qualité identique à celle que l'on obtiendrait avec une pupille circulaire.

Le réflecteur déployable selon l'invention peut comporter d'autres caractéristiques qui peuvent être prises séparément ou en combinaison, et notamment :

- il peut comprendre i) six éléments réfléchissants déployables, qui définissent par paires trois portions identiques et complémentaires de la surface réfléchissante, chaque paire comprenant des premier et second éléments complémentaires, et ii) un mécanisme couplé aux éléments et chargé, d'une part, de maintenir avant déploiement les premier et second éléments de chaque paire dans une seconde position dans laquelle ils sont repliés l'un vers l'autre, au moins partiellement, par rapport à l'une des trois médiatrices du triangle de Reuleaux, et d'autre part, d'entraîner les premier et second éléments de chaque paire en rotation autour de la médiatrice correspondante de manière à les placer dans ladite première position ;

  ➢ le mécanisme peut être chargé de maintenir les premier et second éléments de chaque paire dans une seconde position dans laquelle ils sont repliés l'un vers l'autre par rapport à l'une des trois médiatrices du triangle de Reuleaux afin que leurs surfaces réfléchissantes soient sensiblement en regard l'une de l'autre ;
  ➢ chaque premier élément et chaque second élément de chaque paire peuvent comporter une première partie d'extrémité située au niveau d'une zone centrale du réflecteur et une seconde partie d'extrémité située, une fois déployée, au niveau de l'un des trois sommets du triangle de Reuleaux. Dans ce cas, le mécanisme est chargé d'entraîner en rotation les parties d'extrémité des premier et second éléments de chaque paire, sur une portion angulaire choisie par rapport à un axe sensiblement perpendiculaire à la médiatrice correspondante afin de les placer dans une seconde position dans laquelle l'axe passant par leurs premières et secondes parties d'extrémité fait un premier angle choisi avec une direction perpendiculaire aux trois médiatrices et passant par le centre de ladite zone centrale.

    • le premier angle est par exemple choisi dans un intervalle compris entre 0° et 30° ;
    • le mécanisme peut être également chargé d'entraîner en rotation les parties d'extrémité des premier et second éléments de l'une au moins des paires sur une portion angulaire choisie autour de l'axe afin de rapprocher cette paire de l'une au moins des autres paires.

L'invention propose également un instrument d'observation, pour un engin spatial, comprenant au moins un réflecteur déployable selon l'une des revendications précédentes.
Cet instrument d'observation peut par exemple comprendre un support de type axial, d'une première part, sensiblement parallèle à la direction perpendiculaire aux trois médiatrices du triangle de Reuleaux, d'une deuxième part, auquel est solidarisé le mécanisme du réflecteur déployable, et d'une troisième part, muni en un niveau choisi de trois ouvertures propres chacune à loger des portions des premier et second éléments d'une paire lorsqu'ils sont placés dans la seconde position.
L'invention est particulièrement bien adaptée, bien que de façon non exclusive, aux instruments d'observation de type télescope (pour les applications optiques) ou antenne (pour les applications hyperfréquences), destinés à être implantés dans des engins spatiaux, comme par exemple des satellites.
D'autres caractéristiques et avantages de l'invention apparaîtront à l'examen de la description détaillée ci-après, et du dessin annexé, sur lequel :

- la figure 1 illustre de façon schématique comment construire géométriquement un triangle de Reuleaux,
- la figure 2 illustre de façon schématique une pupille en forme de triangle de Reuleaux ayant la même fréquence de coupure optique (FCO) qu'une pupille de forme circulaire,
- les figures 3A à 3D illustrent de façon schématique un enchaînement d'étapes permettant de replier un réflecteur selon l'invention,
- les figures 4A et 4B illustrent respectivement, de façon schématique, un premier exemple de repliement d'un réflecteur selon l'invention, dans une vue en perspective, et un second exemple de repliement d'un réflecteur selon l'invention, dans une vue de face, et
- les figures 5A et 5B illustrent de façon schématique une partie d'un instrument d'observation en l'absence de son réflecteur secondaire mais avec un réflecteur primaire respectivement replié et déployé (ou déplié).

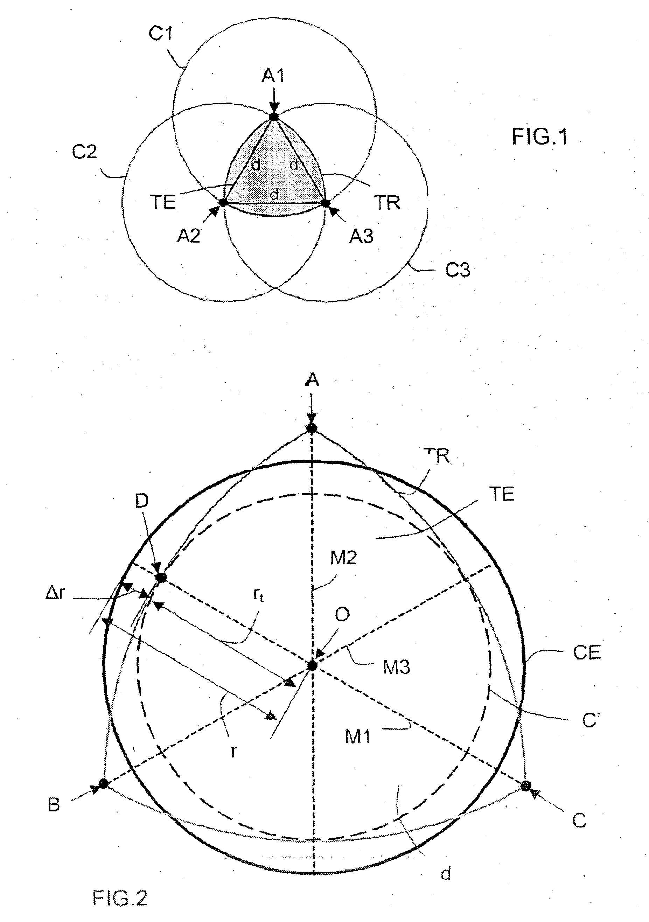

Les dessins annexés pourront non seulement servir à compléter l'invention, mais aussi contribuer à sa définition, le cas échéant.
L'invention a pour objet d'offrir un réflecteur (primaire) de grand diamètre, pour un instrument d'observation spatiale, dont l'encombrement latéral est minimisé pendant la phase de tir et dont le déploiement (ou dépliage) mécanique est réalisable en orbite.
Plus précisément, l'invention propose un réflecteur déployable comprenant un nombre choisi d'éléments réfléchissants déployables qui, une fois qu'ils sont déployés dans une première position, définissent ensemble une surface réfléchissante en forme de triangle dit de Reuleaux à courbe convexe fermée dont la largeur est constante en fonction de la direction.
Dans le cas d'une application optique, le réflecteur est par exemple un miroir.
Comme cela est schématiquement illustré sur la figure 1, pour construire géométriquement un triangle de Reuleaux, on forme tout d'abord trois cercles Ci (i = 1 à 3) placés les uns par rapport aux autres de sorte que la circonférence de chacun d'entre eux (Ci) passe par le centre Ai' (i'≠i) des deux autres (Ci'). En reliant au moyen de droites les centres Ai des trois cercles Ci, on définit un triangle équilatéral TE de côté d. Le triangle de Reuleaux TR, de côté d, est quant à lui défini par les trois arcs des trois cercles Ci qui relient deux à deux les centres Ai des cercles Ci.

Comme indiqué ci-dessus, le triangle de Reuleaux est une courbe convexe fermée appartenant à la famille des courbes à largeur constante (ou orbiformes) dont le cercle est l'un des représentants. Ces orbiformes sont des courbes fermées qui, lorsqu'elles sont en rotation dans un domaine carré sont simultanément en contact avec les quatre côtés de ce carré. La largeur d'une courbe convexe fermée est définie comme la distance entre deux droites parallèles qui la délimitent. Une conséquence est que le support d'auto-corrélation du triangle de Reuleaux de côté d est géométriquement identique au support d'auto-corrélation du cercle de diamètre d.

En utilisant un télescope ou une antenne (ou plus généralement un instrument d'observation) comprenant un réflecteur définissant, une fois déplié, une pupille d'entrée (collectrice) en forme de triangle de Reuleaux, on peut non seulement compacter efficacement ledit réflecteur suivant certains axes (ses médiatrices Mi) afin de minimiser son encombrement latéral en phase de tir, mais également lui conférer des propriétés d'isotropie du cercle. Il est ici rappelé que la FTM d'un instrument optique est obtenue en effectuant l'auto-correlation de sa pupille d'entrée. Si cette dernière est circulaire alors le support de sa FTM l'est également. L'isotropie est alors assurée et l'instrument collecte de l'énergie (des photons) identiquement dans toutes les directions angulaires. Cette caractéristique est fondamentale dans le cadre de l'observation grand champ, et notamment dans le cadre de l'observation de la Terre.

L'utilisation d'un réflecteur déplié en forme de triangle de Reuleaux permet en outre de minimiser sa surface collectrice et donc sa masse comparativement à un réflecteur de forme circulaire présentant la même Fréquence de Coupure Optique (ou FCO). Certes, cette réduction de la surface collectrice doit être compensée par une augmentation du temps de pose (temps d'intégration des photons). Il est en effet rappelé que le rapport signal sur bruit est fonction du produit entre le temps de pose et la surface collectrice, si bien qu'il faut poser proportionnellement plus longtemps pour obtenir une même image avec moins de surface collectrice. Cette augmentation du temps de pose est moins critique dans le cadre de l'observation spatiale depuis une orbite haute (par exemple géostationnaire) puisque le paysage imagé par l'instrument d'observation reste relativement (voire durablement) fixe. On peut également utiliser un traitement de restauration (de type déconvolution ou post-accumulation) pour compenser la réduction du nombre de photons collectés.

Comme cela est illustré sur la figure 2, lorsque les trois sommets A, B et C du triangle de Reuleaux TR sont respectivement situés sur les trois sommets d'un triangle équilatéral TE de côté d, alors le réflecteur, qui une fois déplié (ou déployé) présente cette forme de triangle de Reuleaux TR de côté d, conduit exactement à la même FCO que celle présentée par une pupille de forme circulaire CE et de diamètre d.

Le support de la Fonction de Transfert Optique (FTO) d'un instrument d'observation dont la pupille d'entrée est un réflecteur en forme de triangle de Reuleaux TR de côté d est donc identique à celui obtenu avec un réflecteur de forme circulaire CE et de diamètre d. Mais, cette pupille d'entrée TR présente une surface de plus petite dimension que celle présentée par la pupille d'entrée circulaire CE. En effet, si l'on note d la longueur du côté du triangle équilatéral TE inscrit dans le triangle de Reuleaux associé TR, l'aire $A_R$ de ce dernier vaut :

$$A_R = \frac{d^2}{2}\left(\pi - \sqrt{3}\right).$$

L'aire $A_C$ du cercle CE circonscrit vaut quant à elle :

$$A_c = \pi \frac{d^2}{4}.$$

On en déduit alors que la surface du triangle de Reuleaux TR représente environ 89,7 % de celle du cercle circonscrit CE. Par conséquent, si l'on fait l'hypothèse que la masse du réflecteur est directement proportionnelle à sa surface, alors la masse d'un réflecteur en forme de triangle de Reuleaux TR est environ 10,3 % inférieure à celle d'un réflecteur à géométrie circulaire pure CE.

Par ailleurs, si l'on appelle $r_t$ le rayon du cercle C' inscrit à l'intérieur du triangle de Reuleaux TR, alors $r_t$ est lié au rayon r (r = d/2) du cercle circonscrit CE par la relation suivante :

$$r_t = 2r\left(1 - \sqrt{3}\right) \approx 0,845r,$$

de laquelle on déduit :

$$\Delta_r = r - r_t = r \frac{2 - \sqrt{3}}{\sqrt{3}} \approx 0,155r .$$

L'écart maximum entre le cercle inscrit C' et le triangle de Reuleaux TR, de même FCO, correspond à environ 15,5 % du rayon du cercle circonscrit CE. Autrement dit, la plus petite distance OD, entre le centre O du triangle de Reuleaux TR et son bord, est égale au rayon $r_t$ qui est lui-même égal à 84,5 % de la valeur du rayon r du cercle circonscrit CE de même FCO.

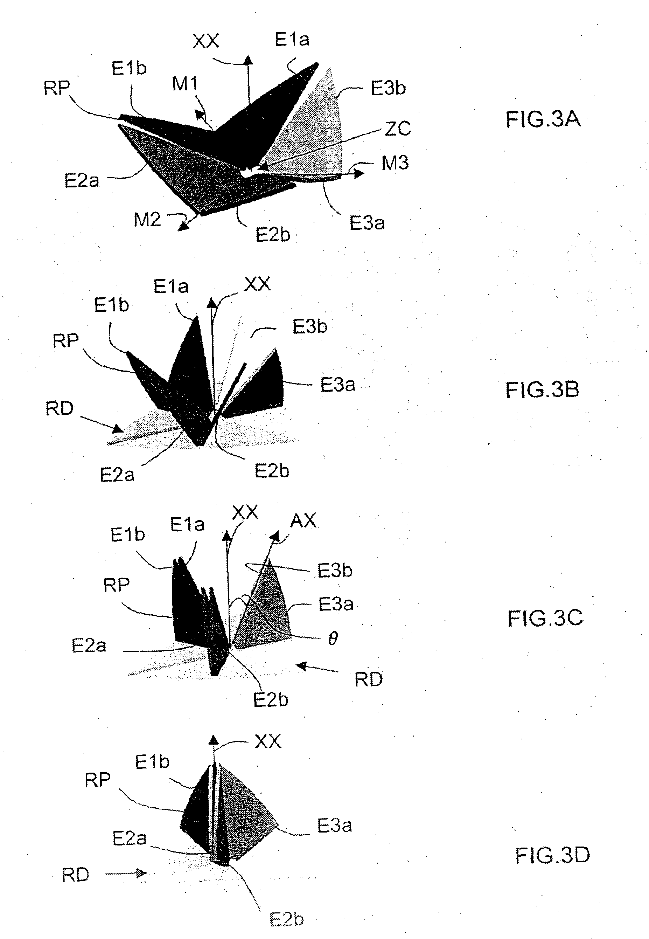

Par conséquent, si l'on veut compacter de manière optimale (c'est-à-dire obtenir un encombrement minimum) un réflecteur en forme de triangle de Reuleaux TR, il faut tout d'abord le « découper » suivant les segments OA, OB et OC afin de constituer trois portions Ei (i = 1 à 3) complémentaires et sensiblement identiques, puis, comme illustré sur les figures 3A et 3B, plier chaque partie Ei en deux sous-parties (ou éléments) Eij (j = a ou b), sensiblement complémentaires, suivant la médiatrice Mi correspondante du triangle de Reuleaux TR. Comme cela est illustré sur la figure 2, chaque médiatrice Mi passe en effet par un point (D dans le cas de M1) qui est situé sur le bord du triangle de Reuleaux TR à l'endroit où il est le moins éloigné de son centre O. Le réflecteur ainsi segmenté en paires Ei d'éléments déployables Eij assure un encombrement maximal délimité par le cercle inscrit C' de rayon $r_t$.

Il est important de noter que les deux éléments (sous-parties) Eij (Eia et Eib) d'une paire ou portion Ei peuvent être partiellement repliés l'un vers l'autre comme cela est illustré sur la figure 3B, ou bien totalement repliés l'un vers l'autre afin que leurs surfaces réfléchissantes soient en regard l'une de l'autre et approximativement parallèles entre elles comme illustré sur la figure 3C. Sur les figures 3A à 3D, la référence RP désigne le réflecteur quand il n'est pas en position déployée (ou dépliée), tandis que la référence RD désigne le réflecteur quand il est en position déployée (ou première position).

Lorsque les éléments déployables Eij d'une paire Ei ont été repliés partiellement ou totalement l'un vers l'autre, l'axe AX, qui est parallèle à chaque arête d'un élément Eij, passant par le sommet de ce dernier et par une première partie d'extrémité située dans une zone centrale ZC, fait un angle θ par rapport à l'axe XX qui est perpendiculaire aux médiatrices Mi du triangle de Reuleaux TR (déployé) au niveau de son centre O (situé dans la zone centrale ZC). Le sommet d'un élément déployable Eij est une seconde partie d'extrémité qui définit partiellement l'un des trois sommets A, B et C du triangle de Reuleaux TR lorsqu'il est totalement déployé (première position).

L'encombrement maximal du réflecteur RP (en phase de tir), notamment illustré sur la figure 3C, peut être réduit. Pour ce faire, on peut entraîner sur une portion angulaire choisie le sommet de chacun des éléments déployables Eij (repliés partiellement ou totalement) vers l'axe XX afin de réduire la valeur de l'angle θ. On est ainsi assuré que l'encombrement latéral du réflecteur RP est délimité par un cercle de rayon inférieur à $r_t$. Par exemple, l'angle θ final peut être compris entre environ 0° et environ 30°. Plus cet angle θ final est petit, plus l'encombrement latéral du réflecteur RP est petit (en phase de tir).

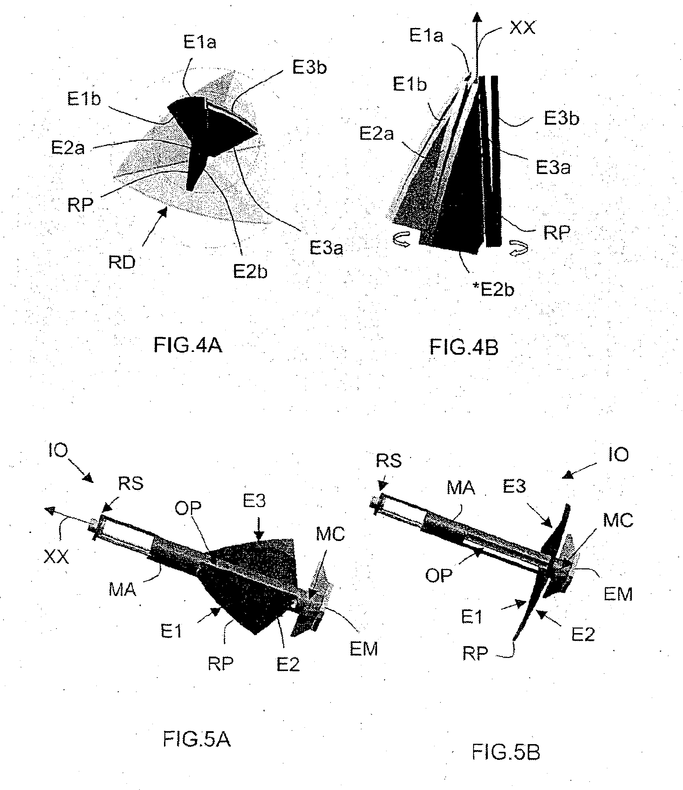

Dans l'exemple illustré sur les figures 3D et 4A, l'angle θ final est sensiblement égal à zéro (0). Cela correspond à une position finale (ou seconde position) qui est favorable au maintien des éléments déployables Eij du réflecteur MR durant la phase de tir.

L'encombrement maximal du réflecteur RP (en phase de tir) peut être encore plus réduit. Pour ce faire, on peut, comme illustré sur la figure 4B, entraîner en rotation autour de l'axe XX, sur une portion angulaire choisie, l'une au moins des paires Ei d'éléments déployables Eij, de manière à la rapprocher de l'une au moins des autres paires Ei'. Dans l'exemple illustré sur la figure 4B, on a rapproché les paires E1 (E1a et E1b) et E3 (E3a et E3b) de la paire E2 (E2a et E2b). L'encombrement latéral du réflecteur RP lorsqu'il est dans sa seconde position (pendant la phase de tir) peut être ainsi grandement réduit par rapport à l'encombrement latéral de ce même réflecteur RP lorsqu'il est dans sa seconde position RD (une fois déployé).

Toutes ces opérations de repliement sont effectuées au moyen d'un mécanisme MC qui est couplé aux paires d'éléments déployables Eij du réflecteur RP et fait partie de l'instrument d'observation IO.

Par exemple, comme illustré sur les figures 5A et 5B, l'instrument d'observation IO peut comprendre un support MA, comme par exemple un mât (éventuellement creux), qui s'étend sensiblement suivant l'axe XX, et comprend, d'une première part, une embase EM dans laquelle est par exemple implanté le mécanisme MC du réflecteur (primaire) RP déployable, d'une deuxième part, trois ouvertures primaires (ou encoches) OP communiquant avec l'embase EM et destinées chacune à loger une portion des premier Eia et second Eib éléments déployables d'une paire Ei, lorsqu'elle est placée dans la seconde position, et d'une troisième part, une partie d'extrémité supportant un réflecteur secondaire RS.

Un exemple de position repliée (ou seconde position) du réflecteur RP pendant la phase de tir est illustré sur la figure 5A, tandis que la position dépliée ou déployée (ou première position) du réflecteur RP pendant la phase d'observation est illustrée sur la figure 5B.

Le déploiement (ou dépliement) du réflecteur RP de sa seconde position vers sa première position se fait en effectuant les opérations mentionnées ci-avant dans le cas du repliement, mais dans le sens inverse, au moyen du mécanisme MC. Par conséquent, une fois l'engin spatial placé en orbite, le mécanisme MC commence éventuellement par entraîner en rotation par rapport à l'axe XX chaque paire Ei initialement rapprochée d'une autre paire Ei', de sorte qu'elles soient sensiblement à 120° les unes des autres. Puis, le mécanisme MC écarte de l'axe XX les sommets des paires Ei d'éléments Eij jusqu'à ce que l'angle entre les axes XX et AX soit égal à θ. Enfin, le mécanisme MC entraîne en rotation autour de chaque médiatrice Mi les éléments déployables Eij de chaque paire Ei correspondante jusqu'à ce que le réflecteur RP présente une forme de triangle de Reuleaux correspondant à sa première position.

L'invention offre plusieurs avantages, parmi lesquels :

- un gain appréciable de masse et d'encombrement pour une capacité d'imagerie quasi identique (au temps d'intégration près) à celle d'un réflecteur circulaire du fait d'une fréquence de coupure angulairement invariante,
- une réduction du nombre d'éléments à contrôler, et donc des mécanismes de positionnement d'éléments, pour constituer en orbite un réflecteur adapté à la mission, comparé à un réflecteur réalisé au moyen d'éléments hexagonaux,
- une surface collectrice minimale et entièrement utile,
- une réduction des mécanismes de déploiement due au faible nombre d'éléments à déployer.

L'invention ne se limite pas aux modes de réalisation de réflecteur déployable et d'instrument d'observation spatiale décrits ci-avant, seulement à titre d'exemple, mais elle englobe toutes les variantes que pourra envisager l'homme de l'art dans le cadre des revendications ci-après.

**Revendications**

1. Réflecteur déployable (RP) pour un instrument d'observation spatiale (IO), **caractérisé en ce qu'**il comprend un nombre choisi d'éléments réfléchissants déployables (Eij) propres, une fois déployés dans une première position, à définir ensemble une surface réfléchissante en forme de triangle dit de Reuleaux (TR) à courbe convexe fermée de largeur constante en fonction de la direction.

2. Réflecteur déployable selon la revendication 1, **caractérisé en ce qu'**il comprend i) six éléments réfléchissants déployables (Eia,Eib) définissant par paires trois portions (Ei) identiques et complémentaires de ladite surface réfléchissante, chaque paire (Ei) comprenant des premier (Eia) et second (Eib) éléments complémentaires, et ii) un mécanisme (MC) couplé auxdits éléments (Eia,Eib) et agencé, d'une part, pour maintenir avant déploiement les premier (Eia) et second (Eib) éléments de chaque paire (Ei) dans une seconde position dans laquelle ils sont repliés l'un vers l'autre, au moins partiellement, par rapport à l'une des trois médiatrices (Mi) dudit triangle de Reuleaux (TR), et d'autre part, pour entraîner lesdits premier (Eia) et second (Eib) éléments de chaque paire (Ei) en rotation autour de la médiatrice correspondante (Mi) de manière à les placer dans ladite première position.

3. Réflecteur déployable selon la revendication 2, **caractérisé en ce que** ledit mécanisme (MC) est agencé pour maintenir les premier (Eia) et second (Eib) éléments de chaque paire (Ei) dans une seconde position dans laquelle ils sont repliés l'un vers l'autre par rapport à l'une des trois médiatrices (Mi) dudit triangle de Reuleaux de sorte que leurs surfaces réfléchissantes soient sensiblement en regard l'une de l'autre.

4. Réflecteur déployable selon l'une des revendications 2 et 3, **caractérisé en ce que** chaque premier élément (Eia) et chaque second élément (Eib) de chaque paire (Ei) comporte une première partie d'extrémité située au niveau d'une zone centrale (ZC) dudit réflecteur (RP) et une seconde partie d'extrémité située, une fois déployée, au niveau de l'un des trois sommets dudit triangle de Reuleaux (TR), et **en ce que** ledit mécanisme (MC) est agencé pour entraîner en rotation lesdites parties d'extrémité des premier (Eia) et second (Eib) éléments de chaque paire (Ei) sur une portion angulaire choisie par rapport à un axe (XX) sensiblement perpendiculaire à la médiatrice correspondante (Mi) afin de les placer dans une seconde position dans laquelle un axe (AX) passant par leurs premières et secondes parties d'extrémité fait un premier angle choisi avec une direction (XX) perpendiculaire aux trois médiatrices (Mi) et passant par le centre (O) de ladite zone centrale (ZC).

5. Réflecteur déployable selon la revendication 4, **caractérisé en ce que** ledit premier angle est choisi dans un intervalle compris entre 0° et 30°.

6. Réflecteur déployable selon l'une des revendications 4 et 5, **caractérisé en ce que** ledit mécanisme (MC) est agencé pour entraîner en rotation lesdites parties d'extrémité des premier (Eia) et second (Eib) éléments de l'une au moins desdites paires (Ei), sur une portion angulaire choisie autour dudit axe (XX) afin de rapprocher cette paire de l'une au moins des autres paires.

7. Instrument d'observation spatiale (IO) pour un engin spatial, **caractérisé en ce qu'**il comprend au moins un réflecteur déployable (RP) selon l'une des revendications précédentes.

8. Instrument d'observation spatiale selon la revendication 7, **caractérisé en ce qu'**il comprend un support (MA) de type axial i) sensiblement parallèle à la direction (XX) perpendiculaire aux trois médiatrices (Mi) dudit triangle de Reuleaux (TR), ii) auquel est solidarisé le mécanisme (MC) dudit réflecteur déployable (RP), et iii) muni en un niveau choisi de trois ouvertures (OPi) propres chacune à loger des portions des premier (Eia) et second (Eib) éléments d'une paire (Ei) lorsqu'ils sont placés dans ladite seconde position.

## Claims

1. Deployable reflector (RP) for a space observation instrument (IO), **characterized in that** it comprises a chosen number of deployable reflecting elements (Eij) suitable, once deployed in a first position, for together defining a reflecting area in the form of a so-called Reuleaux triangle (TR) with closed convex curve whose width is constant as a function of direction.

2. Deployable reflector according to Claim 1, **characterized in that** it comprises i) six deployable reflecting elements (Eia, Eib) defining in pairs three identical and complementary portions (Ei) of said reflecting area, each pair (Ei) comprising first (Eia) and second (Eib) complementary elements, and ii) a mechanism (MC) coupled to said elements (Eia, Eib) and designed, on the one hand, to maintain before deployment the first (Eia) and second (Eib) elements of each pair (Ei) in a second position in which they are folded back towards one another, at least partially, with respect to one of the three right bisectors (Mi) of said Reuleaux triangle (TR), and on the other hand, to rotate said first (Eia) and second (Eib) elements of each pair (Ei) about the corresponding right bisector (Mi) so as to place them in said first position.

3. Deployable reflector according to Claim 2, **characterized in that** said mechanism (MC) is designed to maintain the first (Eia) and second (Eib) elements of each pair (Ei) in a second position in which they are folded back towards one another with respect to one of the three right bisectors (Mi) of said Reuleaux triangle so that their reflecting areas are substantially opposite one another.

4. Deployable reflector according to either of Claims 2 and 3, **characterized in that** each first element (Eia) and each second element (Eib) of each pair (Ei) comprises a first end part situated at the level of a central zone (ZC) of said reflector (RP) and a second end part situated, once deployed, at the level of one of the three vertices of said Reuleaux triangle (TR), and **in that** said mechanism (MC) is designed to rotate said end parts of the first (Eia) and second (Eib) elements of each pair (Ei) over an angular portion chosen with respect to an axis (XX) substantially perpendicular to the corresponding right bisector (Mi) so as to place them in a second position in which an axis (AX) passing through their first and second end parts makes a first chosen angle with a direction (XX) perpendicular to the three right bisectors (Mi) and passing through the center (O) of said central zone (ZC).

5. Deployable reflector according to Claim 4, **characterized in that** said first angle is chosen in an interval lying between 0° and 30°.

6. Deployable reflector according to either of Claims 4 and 5, **characterized in that** said mechanism (MC) is designed to rotate said end parts of the first (Eia) and second (Eib) elements of one at least of said pairs (Ei), over a chosen angular portion about said axis (XX) so as to bring this pair closer to one at least of the other pairs.

7. Space observation instrument (IO) for a spacecraft, **characterized in that** it comprises at least one deployable reflector (RP) according to one of the preceding claims.

8. Space observation instrument according to Claim 7, **characterized in that** it comprises a support (MA) of axial type i) substantially parallel to the direction (XX) perpendicular to the three right bisectors (Mi) of said Reuleaux triangle (TR), ii) integral with the mechanism (MC) of said deployable reflector (RP), and iii) furnished at a chosen level with three openings (OPi) each suitable for housing portions of the first (Eia) and second (Eib) elements of a pair (Ei) when they are placed in said second position.

## Patentansprüche

1. Ausschwenkbarer Reflektor (RP) für ein Raumbeobachtungsinstrument (IO), **dadurch gekennzeichnet, dass** er eine gewählte Anzahl von ausschwenkbaren reflektierenden Elementen (Eij) umfasst, die nach dem Ausschwenken in eine erste Position dazu geeignet sind, zusammen eine reflektierende Oberfläche in Form eines so genannten Reuleaux-Dreiecks (TR) mit einer geschlossenen konvexen Krümmung von je nach Richtung konstanter Breite zu definieren.

2. Ausschwenkbarer Reflektor nach Anspruch 1, **dadurch gekennzeichnet, dass** er Folgendes umfasst: i) sechs ausschwenkbare reflektierende Elemente (Eia, Eib), die gepaart drei identische und sich ergänzende Abschnitte (Ei) der reflektierenden Oberfläche definieren, wobei jedes Paar (Ei) erste (Eia) und zweite (Eib) sich ergänzende Elemente umfasst, und ii) einen Mechanismus (MC), der mit den Elementen (Eia, Eib) gekoppelt ist und einerseits angeordnet ist, um vor dem Ausschwenken die ersten (Eia) und zweiten (Eib) Elemente jedes Paars (Ei) in einer zweiten Position zu halten, in der sie mindestens teilweise im Verhältnis zu einer der drei Mittelsenkrechten (Mi) des Reuleaux-Dreiecks (TR) zusammengeklappt sind, und andererseits angeordnet ist, um die ersten (Eia) und zweiten (Eib) Elemente jedes Paars (Ei) um die entsprechende Mittelsenkrechte (Mi) zu drehen, um sie in der ersten Position anzuordnen.

3. Ausschwenkbarer Reflektor nach Anspruch 2, **dadurch gekennzeichnet, dass** der Mechanismus (MC) angeordnet ist, um die ersten (Eia) und zweiten (Eib) Elemente jedes Paars (Ei) in einer zweiten Position zu halten, in der sie im Verhältnis zu einer der drei Mittelsenkrechten (Mi) des Reuleaux-Dreiecks zusammengeklappt sind, so dass sich ihre reflektierenden Oberflächen im Wesentlichen gegenüberliegen.

4. Ausschwenkbarer Reflektor nach einem der Ansprüche 2 und 3, **dadurch gekennzeichnet, dass** jedes erste Element (Eia) und jedes zweite Element (Eib) eines jeden Paars (Ei) einen ersten Endteil, der an einem mittleren Bereich (ZC) des Reflektors (RP) liegt, und einen zweiten Endteil, der nach dem Ausschwenken an einem der drei Scheitelpunkte des Reuleaux-Dreiecks (TR) liegt, umfasst, **dadurch gekennzeichnet, dass** der Mechanismus (MC) angeordnet ist, um die Endteile der ersten (Eia) und zweiten (Eib) Elemente eines jeden Paars (Ei) um einem Winkelabschnitt, der im Verhältnis zu einer Achse (XX) gewählt wird, die im Wesentlichen zu der entsprechenden Mittelsenkrechten (Mi) rechtwinklig ist, zu drehen, um sie in einer zweiten Position anzuordnen, in der eine Achse (AX), die durch ihre ersten und zweiten Endteile geht, einen ersten Winkel bildet, der mit einer Richtung (XX) gewählt wird, die zu den drei Mittelsenkrechten (Mi) rechtwinklig ist und durch den Mittelpunkt (O) des mittleren Bereichs (ZC) geht.

5. Ausschwenkbarer Reflektor nach Anspruch 4, **dadurch gekennzeichnet, dass** der erste Winkel in einem Intervall zwischen 0° und 30° gewählt wird.

6. Ausschwenkbarer Reflektor nach einem der Ansprüche 4 und 5, **dadurch gekennzeichnet, dass** der Mechanismus (MC) angeordnet wird, um die Endteile der ersten (Eia) und zweiten (Eib) Elemente mindestens eines der Paare (Ei) um einen Winkelabschnitt, der um die Achse (XX) gewählt wird, zu drehen, um dieses Paar mindestens einem der anderen Paare näher zu bringen.

7. Raumbeobachtungsinstrument (IO) für einen Raumflugkörper, **dadurch gekennzeichnet, dass** es mindestens einen ausschwenkbaren Reflektor (RP)
nach einem der vorhergehenden Ansprüche umfasst.

8. Raumbeobachtungsinstrument nach Anspruch 7, **dadurch gekennzeichnet, dass** es einen Träger (MA) axialer Art umfasst, i) der zu der Richtung (XX), die zu den drei Mittelsenkrechten (Mi) des Reuleaux-Dreiecks (TR) rechtwinklig ist, im Wesentlichen parallel ist, ii) mit dem der Mechanismus (MC) des ausschwenkbaren Reflektors (RP) einstückig gemacht ist, und iii) der auf einer gewählten Ebene mit drei Öffnungen (OPi) versehen ist, die jeweils dazu geeignet sind, die Abschnitte der ersten (Eia) und zweiten (Eib) Elemente eines Paars (Ei) aufzunehmen, wenn sie in der zweiten Position angeordnet sind.

FIG.1

FIG.2

FIG.3A

FIG.3B

FIG.3C

FIG.3D

FIG.4A

FIG.4B

FIG.5A

FIG.5B

11